# EUROPÄISCHE PATENTANMELDUNG

(11) **EP 2 815 840 A1**
(43) Veröffentlichungstag der Anmeldung: **24.12.2014**
(21) Anmeldenummer: 13172278.7
(22) Anmeldetag: 17.06.2013
(51) Int. Cl.: B23K 35/30, B23K 35/02, C22C 19/05

(54) **Löten von Stählen und Bauteil**

(71) Anmelder: Siemens Aktiengesellschaft, 80333 München (DE)
(72) Erfinder: Piegert, Sebastian, 10777 Berlin (DE); Reinkensmeier, Ingo, 58730 Fröndenberg (DE)

(57) **Zusammenfassung**

Durch die Verwendung von Nickel-basiertem Lot, sehr hohen Löttemperaturen und entsprechend langen Haltezeiten wird eine sehr gute strukturelle Verbindung zwischen Stählen erreicht.

## Beschreibung

Die Erfindung betrifft das Fügen mittels Hochtemperaturlöten von Stählen und ein Bauteil.

Stähle werden meist über Schweißverfahren gefügt.

Löten stellt eine Alternative dar, jedoch muss die Lotverbindung gute mechanische Eigenschaften für eine LCF-Beanspruchung oder sonstige Belastungen aufweisen, um auch in hochbelasteten Bereichen zur Anwendung zu kommen.

Es ist daher Aufgabe der Erfindung ein strukturelles Lötverfahren aufzuzeigen, dass oben genanntes Problem löst.

Die Aufgabe wird gelöst durch ein Verfahren gemäß Anspruch 1 und ein Bauteil gemäß Anspruch 12.

In den Unteransprüchen sind weitere vorteilhafte Maßnahmen aufgelistet, die beliebig miteinander kombiniert werden können, um weitere Vorteile zu erzielen.

Der Vorteil der Erfindung liegt in der einfach durchzuführenden Lötung von Stählen mit sehr guten mechanischen Eigenschaften in der Fügung für das Bauteil.

Die Beschreibung stellt nur Ausführungsbeispiele der Erfindung dar.

Stähle, die mittels des erfindungsgemäßen Verfahrens gefügt werden können, sind keinerlei Beschränkung unterworfen, jedoch insbesondere eignet sich das Verfahren für niedriglegierte ferritische Stähle oder Stähle mit Molybdän, insbesondere 16Mo3.

Der Stahl 16Mo3 weist auf:
ein Kohlenstoffanteil (C) von 0,12Gew.-% - 0,2Gew.-%,
ein Siliziumanteil (Si) < 0,35Gew.-%,
ein Mangananteil (Mn) von 0,4Gew.-% - 0,9Gew.-%,
ein Phosphoranteil (P) von max. 0,025 sowie
einen maximalen Schwefelgehalt (S) von 0,01Gew.-%,
ein Chromanteil (Cr) liegt bei ≤ 0,3 Gew.-%,
ein Molybdängehalt (Mo) liegt zwischen 0,25 - 0,35 Gew.-%, ein Gehalt an Nickel (Ni) kann bis zu 0,3Gew.-% betragen und Vanadium (V) mit einem Anteil bis 0,02Gew.-%,
   wobei Werte für Kupfer (Cu) bis 0,3Gew.-%,
   für Stickstoff (N) bis 0,012Gew.-% und
   für Niob (Nb) bis 0,02Gew.-% zugelassen sind.

Vorzugsweise weist der Stahl Silizium (Si) auf, dessen Anteil deutlich, insbesondere 3mal über der Nachweisgrenze liegt.

Vorzugsweise weist der Stahl Nickel (Ni) auf, dessen Anteil deutlich, insbesondere 3mal über der Nachweisgrenze liegt.

Vorzugsweise weist der Stahl Vanadium (V) auf, dessen Anteil deutlich, insbesondere 3mal über der Nachweisgrenze liegt.

Vorzugsweise weist der Stahl Chrom (Cr) auf, dessen Anteil deutlich, insbesondere 3mal über der Nachweisgrenze liegt.

Vorzugsweise weist der Stahl Kupfer (Cu) auf, dessen Anteil deutlich, insbesondere 3mal über der Nachweisgrenze liegt.

Insbesondere bezieht sich die Erfindung auf das Fügen von artgleichen oder denselben Stählen.

Als Lotmaterial zwischen den Stählen wird eine Nickelbasierte Legierung verwendet.

Das Lotmaterial weist vorzugsweise einen hohen Chromanteil (Cr), vorzugsweise von 18 Gew.-% -20 Gew.-% und/oder einen hohen Siliziumanteil (Si) von mindestens 6 Gew.-% auf.

Vorzugsweise liegt der Chromanteil (Cr) des Lotmaterials bei 19 Gew.-%.

Der Kohlenstoffanteil (C) des Lotmaterials kann bei 0,1 Gew.- % maximal liegen oder liegt bei 0,08 Gew.-%.

Ein vorteilhaftes Lotmaterial weist einen Siliziumanteil (Si) von 7 Gew.-% bis 10 Gew.-% auf.

Durch die Zugabe von Bor (B) kann der Siliziumanteil (Si) reduziert werden, so dass bei einem Siliziumanteil (Si) von 7,3 Gew.-% ein Boranteil (B) von 1,5 Gew.-% verwendet wird.

Insbesondere können dabei Folien oder Pulver verwendet werden, um das Lotmaterial zwischen den Stahlkomponenten aufzutragen.

Die Spalte zwischen den zu fügenden Komponenten aus Stahl sollten klein sein, ≤ 80µm, insbesondere ≤ 50µm betragen.

Zur Oberflächenaktivierung werden vorzugsweise verschiedene Verfahren eingesetzt, insbesondere findet eine Bestrahlung mit SiC-Kugeln statt.

Ein wesentlicher Punkt des Fügeverfahrens liegt in der Löttemperatur, die vorzugsweise bei Temperaturen > 1150°C, insbesondere größer 1185°C liegt und damit deutlich oberhalb der gebräuchlichen Löttemperaturen für Stähle.

Die Löttemperatur liegt vorzugsweise zwischen 1150°C und 1215°C,
insbesondere zwischen 1180°C und 1210°C,
ganz insbesondere bei 1195°C.

Die Haltezeit bei Löttemperatur liegt bei mindestens 20 Minuten, insbesondere mindestens 40 Minuten, und damit deutlich oberhalb der Standardhaltezeiten beim Löten für Stähle von etwa 10 Minuten.

Weitere bevorzugte Wertebereiche für die Haltezeit bei der Löttemperatur liegen zwischen 20min und 120 min, insbesondere zwischen 40min und 100min, ganz insbesondere bei 90min.

Ein beispielhafter Lötzyklus lautet:
Zum Löten werden die zu fügenden Komponenten auf 600°C mit einer Rate von 6,4K/min hochgeheizt und ggf. noch 10 Minuten gehalten,
darauf weiterhin folgt ein Hochheizen auf 1050°C mit einer Rate von 5K/min. und ebenfalls einer optionalen Haltezeit von 10 Minuten,
danach wird die maximale Löttemperatur, vorzugsweise von 1195°C vorzugsweise mit einer Rate von 4,1K/min. erreicht, gefolgt von einer Haltezeit von 90min,
danach erfolgt vorzugsweise direkt anschließend ein Abkühlprozess auf 723°C vorzugsweise mit einer Abkühlrate von 23,5K/min. und einer optionalen Haltezeit dort von 60 Minuten,
danach können die verbundenen Komponenten wieder erhitzt werden mit einer Rate von 14K/min. auf eine Temperatur von 933°C mit einer optionalen Haltezeit von 10 Minuten,
danach wird auf 50°C vorzugsweise durch erzwungene Abkühlung abgekühlt.

Allgemein gilt:
Als weitere Schritte nach dem Löten folgt Normalisieren, gefolgt von Abschrecken, wobei das Normalisieren erfolgt, um die Kornvergröberung im Grundmaterial zu reversieren.

Somit werden gute zyklische mechanische Eigenschaften hergestellt, wenn dies gewünscht ist. Das Abhärten ist erforderlich, um eine gewisse Härtung zu erwirken.

Zusätzlich kann eine Beschichtungswärmebehandlung nachgelagert werden.

Vorzugsweise wird eine Alitierung nach der Lötung durchgeführt.

Mit den beschriebenen Prozessverfahren werden Lötnähte zwischen Stählen hergestellt. Im Test hat sich herausgestellt, dass die Materialprüfproben im Grundwerkstoff und nicht in der Lötnaht versagen, so dass das Löten für strukturelle Fügungen zur Anwendung kommen kann.

## Patentansprüche

1. Verfahren
zum Löten von Stählen
bei dem ein Nickelbasislot zwischen zwei Stahlkomponenten als Lotmaterial verwendet wird.

2. Verfahren nach Anspruch 1,
bei dem das Lot als Folie oder als Pulver zwischen die zwei Stahlkomponenten aufgebracht wird.

3. Verfahren nach einem oder beiden der Ansprüche 1 oder 2, bei dem der Lötspalt zwischen den zwei Stahlkomponenten
≤ 80µm beträgt,
insbesondere ≤ 50µm beträgt.

4. Verfahren nach einem oder mehreren der vorhergehenden Ansprüche 1, 2 oder 3,
bei dem die Löttemperatur bei mindestens 1150°C, insbesondere bei mindestens 1160°C,
ganz insbesondere bei mindestens 1180°C,
liegt.

5. Verfahren nach einem oder mehreren der vorhergehenden Ansprüche 1, 2 oder 3,
bei dem die Löttemperatur zwischen 1150°C und 1215°C, insbesondere zwischen 1180°C und 1210°C,
ganz insbesondere bei 1195°C
liegt.

6. Verfahren nach einem oder mehreren der vorhergehenden Ansprüche 1, 2, 3, 4 oder 5,
bei dem die Haltezeit bei der Löttemperatur bei mindestens 20 Minuten,
insbesondere bei mindestens 40 Minuten,
ganz insbesondere bei mindestens 80 Minuten,
liegt.

7. Verfahren nach einem oder mehreren der vorhergehenden Ansprüche 1, 2, 3, 4 oder 5,
bei dem die Haltezeit bei der Löttemperatur zwischen 20min und 120min,
insbesondere zwischen 40min und 100min,
ganz insbesondere 90min,
beträgt.

8. Verfahren nach einem oder mehreren der vorhergehenden Ansprüche,
bei dem ein Weichglühen nach dem Löten erfolgt, insbesondere bei 723°C für Stahlkomponenten aufweisend 16Mo3.

9. Verfahren nach einem oder mehreren der vorhergehenden Ansprüche,
bei dem ein Normalisieren nach dem Löten durchgeführt wird, insbesondere bei 933°C für Stahlkomponenten aufweisend 16Mo3.

10. Verfahren nach einem oder mehreren der vorhergehenden Ansprüche,
bei dem ein Abschrecken nach dem Löten erfolgt.

11. Verfahren nach einem oder mehreren der folgenden Ansprüche 1 bis 10,
bei dem nach dem Löten eine Beschichtungswärmebehandlung erfolgt.

12. Bauteil aus zwei Stahlkomponenten,
die durch ein Nickelbasislot zusammengefügt sind.

13. Bauteil nach Anspruch 12,
bei dem die Nickelfügung zwischen den Stahlkomponenten eine Breite von ≤ 80µm aufweist.

14. Bauteil oder Verfahren nach einem oder mehreren der vorherigen Ansprüche 1 bis 13,
bei dem der Stahl der Stahlkomponenten einen niedriglegierten ferritischen Stahl oder
einen Stahl mit Molybdän (Mo),
insbesondere 16Mo3,
darstellt.

15. Verfahren oder Bauteil nach einem oder mehreren der Ansprüche 1 bis 14,
bei dem eine Nickel-Chrom-Silizium-Legierung (Ni-Cr-Si) als Lotmaterial zwischen den Stahlkomponenten vorhanden ist.

16. Verfahren oder Bauteil nach einem oder mehreren der Ansprüche,
bei dem der Chromanteil (Cr) des Lotmaterials 18Gew.% bis 20Gew.%,
insbesondere 19Gew.% beträgt.

17. Verfahren oder Bauteil nach einem oder mehreren der Ansprüche,
bei dem die Stahlkomponenten dasselbe oder das gleiche Material aufweisen.

18. Verfahren oder Bauteil nach einem oder mehreren der vorherigen Ansprüche,
bei dem das Nickelbasislot zumindest Silizium (Si) aufweist,
insbesondere mit 7Gew.% - 10 Gew.% Silizium (Si),
ganz insbesondere 10 Gew.% Silizium (Si) und
optional Bor (B) mit mindestens 1 Gew.%,
insbesondere mit 1,5 Gew.%,
ganz insbesondere mit 7.0 - 7.5 Gew.% Silizium (Si).

19. Verfahren oder Bauteil nach einem oder mehreren der vorherigen Ansprüche,
bei dem das Nickelbasislot zumindest Kohlenstoff (C) aufweist,
insbesondere mit mindestens 0.05Gew.% Kohlenstoff (C).

20. Verfahren oder Bauteil nach einem oder mehreren der vorhergehenden Ansprüche,
bei dem eine Alitierung nach der Lötung durchführt wird oder aufweist.
